# EUROPÄISCHE PATENTSCHRIFT

(11) **EP 3 751 537 B1**
(45) Veröffentlichungstag und Bekanntmachung des Hinweises auf die Patenterteilung: **17.09.2025**
(21) Anmeldenummer: 20170771.8
(22) Anmeldetag: 22.04.2020
(51) Int. Cl.: G08G 1/00, G08B 25/01, G01S 11/06, H04W 4/40, H04W 4/90, H04W 4/80

(54) **VERFAHREN UND VORRICHTUNG ZUR ERMITTLUNG SICH ANNÄHERNDER FUNKSIGNALQUELLEN AN EIN IN EINEN UNFALL VERWICKELTES UNFALLFAHRZEUG**
METHOD AND DEVICE FOR DETERMINING RADIO SIGNAL SOURCES APPROACHING A VEHICLE INVOLVED IN AN ACCIDENT
PROCÉDÉ ET DISPOSITIF DE DÉTERMINATION D'UNE SOURCE DE SIGNAL RADIO S'APPROCHANT À UN VÉHICULE ACCIDENTÉ IMPLIQUÉ DANS UNE COLLISION

(30) Priorität: 11.06.2019 DE 102019208483
(43) Veröffentlichungstag der Anmeldung: 16.12.2020
(73) Patentinhaber: Robert Bosch GmbH, 70442 Stuttgart (DE)
(72) Erfinder: Moerbe, Matthias, 74360 Ilsfeld-Helfenberg (DE)

(56) Entgegenhaltungen:
- WO-A1-2018/193056
- DE-A1- 102015 202 792
- DE-U1- 20 316 019
- US-A1- 2015 373 521
- US-A1- 2018 077 538

## Beschreibung

### Stand der Technik

Die DE 20 1017 100 238 U1 beschreibt eine Sende-/Empfangseinrichtung zur automatischen Meldung von Unfällen in Zweiradfahrzeugen, Dreirädern und Vierrädern, dadurch gekennzeichnet, dass sie Folgendes umfasst:
- eine Sendeeinrichtung, welche an ein Fahrzeug der Art Zweiradfahrzeug, Dreirad oder Vierrad angekoppelt ist, wobei die genannte Sendeeinrichtung einen drahtlosen Transmitter umfasst, welcher ein drahtloses Signal wiederholt sendet;
- eine Empfangseinrichtung, welche vom Fahrer oder Beifahrer des Fahrzeugs getragen wird, umfassend: einen Akku; einen drahtlosen Empfänger, welcher das genannte drahtlose Signal empfängt; eine Steuereinheit, welche die Stärke des empfangenen drahtlosen Signals misst und ein Alarmsignal sendet, wenn die genannte Stärke unterhalb einer bestimmten Schwelle liegt.

Die WO2018/193056 A1 beschreibt ein Verfahren, bei dem bei einem Unfall ein Warnsignal ausgegeben wird, wenn sich ein Sender und ein Empfänger relativ zueinander bewegen.

### Offenbarung der Erfindung

Die Erfindung betrifft ein Verfahren zur Ermittlung sich annähernder Funksignalquellen an ein in einen Unfall verwickeltes Unfallfahrzeug gemäß Anspruch 1.

Eine vorteilhafte Ausgestaltung der Erfindung ist dadurch gekennzeichnet, dass es sich bei den Funksignalen um Bluetooth-Signale handelt. Diese Ausgestaltung ist deshalb besonders nützlich, da Bluetooth-Signalquellen und Bluetooth-Sender beispielsweise in Mobiltelefonen sehr weit verbreitet sind.

Erfindungsgemäß wird Information, ob sich wenigstens eine Funksignalquelle dem Unfallfahrzeug annähert, drahtlos vom Unfallfahrzeug an einen Rettungsdienst übermittelt.

Durch diese Zusatzinformation an den Rettungsdienst kann dessen Hilfe zielgerichteter bereitgestellt werden.

Eine vorteilhafte Ausgestaltung der Erfindung dadurch gekennzeichnet, dass ermittelt wird, ob eines der mittels des Funksignalempfängers empfangenen Funksignale einer Funksignalquelle des Fahrers des Unfallfahrzeugs zugeordnet werden kann.

Eine vorteilhafte Ausgestaltung der Erfindung dadurch gekennzeichnet, dass ermittelt wird, ob sich die Funksignalquelle des Fahrers dem Unfallfahrzeug annähert. Dies kann ein Indiz dafür sein, dass der Fahrer keine allzu schweren Verletzungen davongetragen hat.

Eine vorteilhafte Ausgestaltung der Erfindung dadurch gekennzeichnet, dass die drahtlose Ubermittlung der Information vom Unfallfahrzeug an den Rettungsdienst mittels eines automatischen Notrufsystems erfolgt. Bei diesem automatischen Notrufsystem kann es sich beispielsweise um ein eCall-System handeln.

Weiter umfasst die Erfindung eine Vorrichtung gemäß Anspruch 7. handelt es sich insbesondere um ein Steuergerät, in welchem der Programmcode zur Durchführung des Verfahrens nach Anspruch 1 hinterlegt ist.

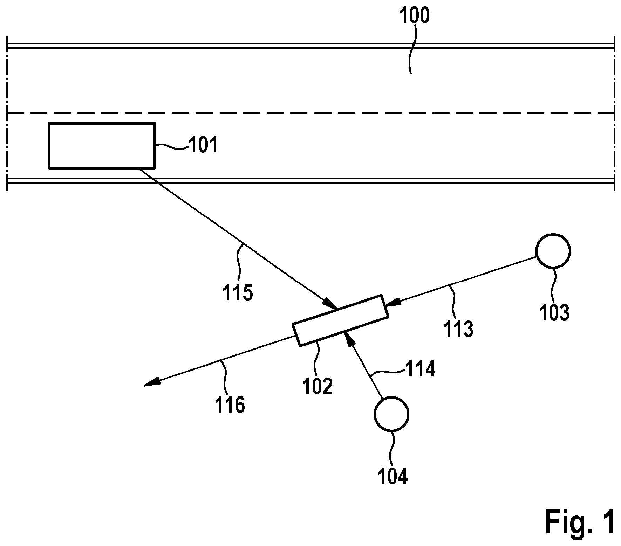

Die Zeichnung umfasst Figur 1.

Fig. 1 zeigt in sehr schematischer Weise in Draufsicht eine Unfallsituation mit in der Nähe befindlichen Funksignalquellen.

Automatischer Verbindungsaufbau ist ein wesentlicher Bestandteil der Bluetooth-Technologie. Dabei werden die in der Nähe einer Bluetooth-Station befindlichen anderen Bluetooth-Stationen erkannt und adressiert.

Dies kann auch auf den Bereich von Fahrzeugen angewandt werden. Ist im Fahrzeug eine Bluetooth-Station installiert, dann werden im Falle eines Unfalls alle in der näheren Umgebung befindlichen Bluetooth-Stationen sowie die jeweils dazugehörige Verbindungsfeldstärke von der im Unfallfahrzeug vorhandenen Bluetooth-Station erfasst. Bei den Bluetooth-Stationen in der näheren Umgebung handelt es sich insbesondere um die Mobiltelefone von in der Nähe befindlichen Personen. Ändern sich diese Feldstärken, dann bedeutet das, dass sich Personen dem Unfallort nähern oder sich davon entfernen. Eine Vergrößerung der Feldstärke bedeutet eine Annäherung der Person an die Unfallstelle, eine Verkleinerung deutet auf die Entfernung der Person von der Unfallstelle hin.

Auch eine Annäherung des Fahrers an die Unfallstelle kann festgestellt werden. Daraus kann geschlossen werden, dass dessen Verletzungen durch den Unfall mit einer gewissen Wahrscheinlichkeit nicht extrem schwerwiegend sind. Die von der unfallfahrzeugseitigen Bluetooth-Station ermittelten Informationen können einem Rettungsdienst drahtlos übermittelt werden, so dass möglicherweise eine Sprachverbindung nicht mehr zwingend erforderlich ist.

In Fig. 1 ist eine schematische Draufsicht auf eine Unfallsituation eines Zweirads dargestellt. Aufgrund eines Unfalls verlässt das Zweirad 102 die Straße 100 und schleudert über den Straßenrand. Im Unfallfahrzeug 102 ist ein Funksignalempfänger installiert, welcher Funksignale benachbarter Funksignalquellen empfängt. In Fig. 1 sind beispielhaft drei Funksignalquellen eingezeichnet:
- eine erste Funksignalquelle ist im auf der Straße die Unfallstelle passierenden Fahrzeug 101 enthalten, das kann z.B. das Mobiltelefon eines Insassen des Fahrzeugs 101 sein. Diese sendet Funksignale 115 aus.
- eine zweite Funksignalquelle trägt eine Person 103 bei sich, welche sich in der Nähe des Unfallortes befindet. Diese sendet Funksignale 113 aus.
- eine dritte Funksignalquelle trägt der Fahrer 104 des Zweirads 102 bei sich, welche infolge des Unfalls vom Zweirad geschleudert wurde. Diese sendet Funksignale 114 aus.

Anhand der Funksignale 113, 114 und 115 kann festgestellt werden, welche diese Signalquellen sich dem Unfallfahrzeug nähern und diese Information wird mittels eines drahtlosen Signales 116 einem Rettungsdienst übermittelt.

## Patentansprüche

1. Verfahren zur Ermittlung sich annähernder Funksignalquellen (101, 103, 104) an ein in einen Unfall verwickeltes Unfallfahrzeug (102), bei dem
- Mittels eines im Unfallfahrzeug (102) enthaltenen Funksignalempfängers Funksignale (113, 114, 115) empfangen und jeweils einer diese Funksignale aussendenden Funksignalquelle (101, 103, 104) zugeordnet werden,
- die zeitliche Änderung der Stärke der einzelnen empfangenen Funksignale (113, 114, 115) ermittelt wird und
- anhand der zeitlichen Änderung der Stärke ermittelt wird, ob sich wenigstens eine Funksignalquelle (101, 103, 104) dem Unfallfahrzeug (102) annähert,
wobei die Funksignalquellen (101, 103, 104) auch Funksignalquellen umfassen, die in auf der Straße die Unfallstelle passierenden Fahrzeugen enthalten sind und/oder Personen bei sich tragen, welche sich in der Nähe des Unfallortes befinden, und
wobei die Information, ob sich wenigstens eine Funksignalquelle (101, 103, 104) dem Unfallfahrzeug (102) annähert, drahtlos vom Unfallfahrzeug (102) an einen Rettungsdienst übermittelt wird (116).

2. Verfahren nach Anspruch 1, wobei es sich bei den Funksignalen (113, 114, 115) um Bluetooth-Signale handelt.

3. Verfahren nach Anspruch 1, wobei ermittelt wird, ob eines der mittels des Funksignalempfängers empfangenen Funksignale (113, 114, 115) einer Funksignalquelle des Fahrers (104) des Unfallfahrzeugs (102) zugeordnet werden kann.

4. Verfahren nach Anspruch 3, **dadurch gekennzeichnet, dass** ermittelt wird, ob sich die Funksignalquelle des Fahrers (104) dem Unfallfahrzeug (102) annähert

5. Verfahren nach Anspruch 1, wobei die drahtlose Übermittlung der Information vom Unfallfahrzeug (102) an den Rettungsdienst mittels eines automatischen Notrufsystems erfolgt.

6. Vorrichtung, enthaltend Mittel, die zur Durchführung des Verfahrens nach einem der Ansprüche 1 bis 5 ausgestaltet sind.

## Claims

1. Method for determining radio signal sources (101, 103, 104) approaching an accident vehicle involved in an accident (102), wherein
- a radio signal receiver contained in the accident vehicle (102) is used to receive radio signals (113, 114, 115) and to assign each of said radio signals to a radio signal source (101, 103, 104) transmitting these radio signals,
- the change in the strength of the individual received radio signals (113, 114, 115) over time is determined, and
- the change in strength over time is used to determine whether at least one radio signal source (101, 103, 104) is approaching the accident vehicle (102),
the radio signal sources (101, 103, 104) also including radio signal sources that are contained in vehicles passing the scene of the accident on the road and/or carried by persons located near the location of the accident, and
the information regarding whether at least one radio signal source (101, 103, 104) is approaching the accident vehicle (102) being transmitted (116) wire-lessly from the accident vehicle (102) to an emergency service.

2. Method according to Claim 1, the radio signals (113, 114, 115) being Bluetooth signals.

3. Method according to Claim 1, it being determined whether one of the radio signals (113, 114, 115) received by means of the radio signal receiver can be assigned to a radio signal source of the driver (104) of the accident vehicle (102).

4. Method according to Claim 3, **characterized in that** it is determined whether the radio signal source of the driver (104) is approaching the accident vehicle (102).

5. Method according to Claim 1, the wireless transmission of the information from the accident vehicle (102) to the emergency service being carried out by means of an automatic emergency system.

6. Device, containing means that are configured to carry out the method according to one of Claims 1 to 5.

## Revendications

1. Procédé de détermination de sources (101, 103, 104) de signaux radio s'approchant d'un véhicule accidenté (102) impliqué dans un accident, dans lequel
- au moyen d'un récepteur de signaux radio contenu dans le véhicule accidenté (102), des signaux radio (113, 114, 115) sont reçus et à chaque fois attribués à l'une des sources (101, 103, 104) de signaux radio envoyant ces signaux radio,
- la modification temporelle de l'intensité des différents signaux radio (113, 114, 115) reçus est déterminée et
- à l'aide de la modification temporelle de l'intensité, on détermine si au moins une source (101, 103, 104) de signaux radio s'approche du véhicule accidenté (102),
les sources (101, 103, 104) de signaux radio comprenant également des sources de signaux radio qui sont contenues dans des véhicules passant dans la rue à côté du site de l'accident et/ou que des personnes portent sur elles, qui se trouvent à proximité du site de l'accident et
l'information indiquant si au moins une source (101, 103, 104) de signaux radio s'approche du véhicule accidenté (102) étant transmise sans fil depuis le véhicule accidenté (102) à un service de secours (116).

2. Procédé selon la revendication 1, dans lequel les signaux radio (113, 114, 115) sont des signaux Bluetooth.

3. Procédé selon la revendication 1, dans lequel on détermine si l'un des signaux radio (113, 114, 115) reçus au moyen du récepteur de signaux radio peut être attribué à une source de signaux radio du chauffeur (104) du véhicule accidenté (102).

4. Procédé selon la revendication 3, **caractérisé en ce qu'**on détermine si la source de signaux radio du chauffeur (104) s'approche du véhicule accidenté (102).

5. Procédé selon la revendication 1, dans lequel la transmission sans fil de l'information à partir du véhicule accidenté (102) au service de secours s'effectue au moyen d'un système d'appel d'urgence automatique.

6. Dispositif, contenant des moyens qui sont conçus pour exécuter le procédé selon l'une des revendications 1 à 5.
